# EUROPÄISCHE PATENTSCHRIFT

(11) **EP 3 756 958 B1**
(45) Veröffentlichungstag und Bekanntmachung des Hinweises auf die Patenterteilung: **15.11.2023**
(21) Anmeldenummer: 20020291.9
(22) Anmeldetag: 24.06.2020
(51) Int. Cl.: B60R 25/33, G07C 5/00

(54) **BETRIEBSWEISE EINES SYSTEMS FÜR DIE ÜBERWACHUNG DER FAHRZEUGSICHERUNG**
OPERATION OF A SYSTEM FOR MONITORING VEHICLE SECURITY
FONCTIONNEMENT D'UN SYSTÈME POUR LA SURVEILLANCE DE LA SÉCURITÉ DES VÉHICULES

(30) Priorität: 26.06.2019 CZ 20190420
(43) Veröffentlichungstag der Anmeldung: 30.12.2020
(73) Patentinhaber: Skoda Auto a.s., 29301 Mladá Boleslav (CZ)
(72) Erfinder: Sixta, Marek, 180 00 Praha 8 (CZ); Novák, Michal, 28901 Dymokury (CZ); Ondrej, Jahn, CZ-29301 Mladá Boleslav ll (CZ); Vladimir, Malik, 02204 Cadca (SK)

(56) Entgegenhaltungen:
- DE-A1-102016 200 061
- US-A1- 2011 257 817
- US-A1- 2017 278 323
- US-A1- 2018 237 024
- US-B1- 9 520 006

## Beschreibung

### Technisches Gebiet:

Betriebsweise eines Systems für die Überwachung der Fahrzeugsicherung, das die Information über den Zustand der Fahrzeugsicherung an den Fahrzeugnutzer ausgibt.

### Stand der Technik:

Mit zunehmender weltweiten Fahrzeugzahl wachsen die Ansprüche an die Verbesserung des Niveaus deren Sicherung. Moderne Automobile ermöglichen oft die Entriegelung des Fahrzeuges nur anhand der erkannten Annäherung des Fahrzeugschlüssels, ohne den eigentlichen Vorgang der Fahrzeugentriegelung durch den Nutzer oder Fahrer mit dem Schlüssel oder durch zentrales Fernentriegelungssystems durchführen zu müssen. Diese Funktion wirkt positiv auf den Komfort des Fahrzeugnutzers, bringt jedoch gewisse Nachteile mit sich, die zum Beispiel in der vergessenen Kontrolle des Fahrzeuges bezüglich der offenen Fenster, eingeschalteten Leuchten u.Ä. liegen

Dem aktuellen Stand der Technik nach kann man eine Reihe von Dokumenten finden, die sich auf ähnliche oder verwandte Probleme fokussieren, die in der Überwachung bestimmter Bedingungen innerhalb des Fahrzeuges und in dem Versenden der relevanten Informationen an den Anwender mittels seiner Empfangseinrichtung, zum Beispiel eines Mobiltelefons oder Tablets, beruhen. Beispielsweise beschreibt die Patentanmeldung US20180354443 A1 System and Method for Child Car Seat Safety Detection and Notification ein System für die Überwachung der sicheren Umgebung für die im Auto beförderten Kinder. Das System umfasst einen entweder im Sitz, oder in dem Sicherheitsgurt des Sitzes eingebauten Geber, wo mittels eines GPS-Moduls oder Akzelerometers die Position dieses Gebers überwacht werden kann. Mittels einer WPAN, Bluetooth oder GSM Schnittstelle werden dann die Informationen, z.B. über Temperatur, an das Mobiltelefon des Nutzers übergeben.

Ähnliches Problem behandelt auch die Patentschrift US 8643493 B1 Child Monitoring System. In diesem Dokument ist eine Überwachungseinrichtung und ein Schlüsselanhänger mit Basiseinheit beschrieben. Die Überwachungseinrichtung weist ein Gehäuse mit einem auf das Versenden von Signalen an den Schlüsselanhänger und Basiseinheit und auf den Empfang von Signalen vom Schlüsselanhänger und der Basiseinheit ausgelegten elektronischen System auf. Nach der Überschreitung eines vorgegebenen Abstands vom Fahrzeug gibt die Überwachungseinrichtung eine Meldung an die Basiseinheit aus und weist den Nutzer darauf hin, dass im Fahrzeug ein Kind allein gelassen wurde.

Ein weiteres relevantes Dokument stellt beispielsweise die Patenanmeldung US 20170084153 A1 dar, in der eine Kommunikationsverbindung des Automobils und des Mobiltelefons über die Bluetooth-Schnittstelle beschrieben ist. Sollte die Verbindung des Fahrzeuges und des Mobiltelefons abreißen, sendet die Überwachungseinrichtung eine Nachricht an das Mobiltelefon und weist den Nutzer auf diese Situation hin.

Das Dokument DE102016200061 offenbart ein Verfahren zur Überwachung der Fahrzeugsicherung, wo das System eine Bordkommunikationseinheit an der Fahrzeugseite, eine Empfangseinrichtung mit wenigstens einem zur Erkennung der Bewegungsaktivität des Nutzers ausgelegten Bewegungssensor sowie mit einem Bildschirm, einen mit der Bordkommunikationseinheit und Empfangseinrichtung kommunikativ verbundenen Fernserver und eine mit der Bordkommunikationseinheit verbundenen Überwachungseinheit an der Fahrzeugseite umfasst, die zur Überwachung des Schließens von Fahrzeugfenstern und der Versendung der Information über den Zustand der Fenster an die Bordkommunikationseinheit ausgelegt ist, wobei es folgende Schritte umfasst:
- Erkennung des Öffnens der Türen durch die Überwachungseinheit;
- Überwachung des Zustandes der Fahrzeugfenster durch die Überwachungseinheit;
- Versendung der Information über den Fensterzustand an die Bordkommunikationseinheit und anschließend an den Fernserver;
- Erkennung der Bewegungsaktivität des Nutzers durch den Bewegungssensor bis zur Überschreitung des Schwellenwertes der Bewegungsaktivität des Nutzers;
- und bei der Überschreitung des Schwellenwertes der bei Bewegungsaktivität des Nutzers die Versendung einer Anforderung der Empfangseinrichtung auf die Zusendung der Zustandsinformation der Türen und/oder Fenster vom Fernserver an die Empfangseinrichtung, wobei diese Information an dem Bildschirm der Empfangseinrichtung als Notifikation angezeigt wird.

Diese Dokumente und viele andere befassen sich vor allem mit der Minimierung des Risikos, ein Kind oder ein Haustier im Automobil zu hinterlassen, und zwar insbesondere bei hoher Temperatur im Fahrzeug, und somit des bestehenden Risikos der Dehydratation oder Überhitzung des Kindes oder Tieres im Fahrzeug. Die oben genannten Dokumente beschreiben jedoch vor allem das Problem des Hinterlassens des Fahrzeuges vom Nutzer und anschließender Warnung des Nutzers, stellen aber keine Überwachung abweichender relevanten Fahrzeugfunktionen oder -zustände dar.

Der Nachteil einiger der oben genannten Dokumente liegt auch in der Notwendigkeit, die Verbindung des Empfangsgerätes, zum Beispiel Smartphones, und des Fahrzeuges über die Bluetooth-Schnittstelle zu nutzen. Diese Voraussetzung führt zur schnelleren Entladung der Smartphone-Batterie und muss in erster Linie vom Nutzer eingeschaltet werden, der dieses Einschalten vergessen kann und das gesamte System dadurch nicht korrekt funktionstüchtig wird.

### Darstellung der Erfindung

Die oben genannten Nachteile werden wenigstens teilweise durch das System zur Überwachung der Fahrzeugsicherung beseitigt, bestehend aus einer Bordkommunikationseinheit, einer Empfangseinrichtung mit wenigstens einem zur Erkennung der Bewegungsaktivität des Nutzers ausgelegten Bewegungssensor sowie mit einem Bildschirm, aus einem mit der Bordkommunikationseinheit und Empfangseinrichtung kommunikativ verbundenen Fernserver und aus einer mit der Bordkommunikationseinheit verbundenen Überwachungseinheit, die zur Überwachung wenigstens des Schließens von Fahrzeugtüren und/oder Fenster, des Ausschaltens des Fahrzeugmotors und der Versendung der Information über den Zustand der Türen und/oder Fenster an die Bordkommunikationseinheit ausgelegt ist. Die Betriebsweise umfasst die Schritte:
- Erkennung des Ausschaltens des Fahrzeugmotors durch die Überwachungseinheit, wobei die Überwachungseinheit zuerst das Ausschalten des Fahrzeugmotors erkennt, wodurch der Prozess der Nutzung des Systems für die Überwachung der Fahrzeugsicherung eingeleitet wird;
- Anschließende Erkennung des Öffnens der Türen durch die Überwachungseinheit;
- Überwachung wenigstens des Zustandes der Fahrzeugtür und/oder -fenster durch die Überwachungseinheit;
- Versendung der Information über den Tür- und/oder Fensterzustand an die Bordkommunikationseinheit und anschließend an den Fernserver;
- Erkennung der Bewegungsaktivität des Nutzers durch den Bewegungssensor bis zur Überschreitung eines Schwellenwertes der Bewegungsaktivität des Nutzers;
- und bei der Überschreitung des Schwellenwertes der Bewegungsaktivität des Nutzers die Versendung einer Anforderung der Empfangseinrichtung auf Zusendung der Zustandsinformation der Türen und/oder Fenster vom Fernserver an die Empfangseinrichtung, wobei diese Information an dem Bildschirm der Empfangseinrichtung als Notifikation angezeigt wird.

In einer vorteilhaften Ausführung umfasst das Systems und seine Betriebsweise ferner einen kommunikativ mit der Bordkommunikationseinheit verbundenen GPS-Tracker des Fahrzeuges und weiter eine mit GPS-Tracker ausgestattete Empfangseinrichtung, wobei bei Erkennung des Ausschaltens des Motors durch die Überwachungseinheit die Fahrzeugposition vom GPS-Tracker geortet und diese Position an den Fernserver gesendet wird, wobei nach Erkennung des Öffnens der Tür durch die Überwachungseinheit die Position des Nutzers durch GPS-Tracker kontinuierlich oder in gewählten Zeitabständen geortet und diese Position an den Fernserver gesendet wird, aus Position des Fahrzeuges und des Nutzers wird der Abstand des Nutzers vom Fahrzeug ermittelt und sollte dieser Abstand einen Schwellenwert überschreiten, werden Informationen über den Zustand der Fahrzeugsicherung an die Empfangseinrichtung gesendet und sofern sich der Abstand des Nutzers vom Fahrzeug nicht unter den Schwellenwert verringert, wird eine Information über den Zustand der Fahrzeugsicherung an den Bildschirm der Empfangseinrichtung als Notifikation angezeigt. Der Vorteil dieser Ausführung liegt in der genaueren Messung des Abstandes und des Schwellenwertes der Nutzerbewegung und somit genauere und sichere Versendung der Notifikation des Zustandes der Fahrzeugsicherung.

Die Betriebsweise des Systems für die Überwachung der Fahrzeugsicherung umfasst ferner in einer vorteilhaften Ausführung eine für die Überwachung sämtlicher relevanten Informationen über den Zustand der Fahrzeugsicherung ausgestaltete Überwachungseinheit, wobei diese die Informationen mittels der Bordkommunikationseinheit an den Fernserver sendet. Der Vorteil dieser Ausführung liegt darin, dass der Nutzer auf jegliche eventuellen Mängel des Fahrzeugzustandes, und zwar nicht nur bezüglich seiner Sicherung, sofort hingewiesen wird.

In einer bevorzugten Ausführung stellt den Sensor der Bewegungsaktivität ein Akzelerometer oder ein Pedometer dar. Der Vorteil dieser Ausführung liegt in dem Entfall der Notwendigkeit, beispielsweise eine Bluetooth-Schnittstelle zu nutzen, was zur Minimierung des Risikos des Vergessens der Nutzung dieser Funktion seitens des Nutzers sowie zur Verringerung des Energieverbrauchs der Empfangseinrichtung, z.B. Smartphones selbst führt.

In einer weiteren bevorzugten Ausführung wird die Information über den Zustand der Fahrzeugsicherung an dem Bildschirm der Empfangseinrichtung nur beim nicht gesicherten Fahrzeug angezeigt. Der Vorteil dieser Ausführung liegt im Unterdrücken unerwünschter Meldungen, denen der Nutzer ausgesetzt ist.

### Erläuterung der Zeichnungen:

Die Darstellung der Erfindung wird weiter an Ausführungsbeispielen erläutert, die unter Nutzung von Zeichnungen beschrieben sind, wobei zeigen:
Fig. 1 - die schematische Darstellung eines Ausführungsbeispiels der Erfindung mit dem System zur Überwachung der Fahrzeugsicherung, bestehend aus einer Überwachungseinheit, einer Bordkommunikationseinheit, einem Fernserver, einer Empfangseinrichtung mit einem Bewegungssensor und einem Bildschirm mit dargestellter Notifikation;
Fig. 2 - die schematische Darstellung eines zweiten Ausführungsbeispiels der Erfindung mit dem System zur Überwachung der Fahrzeugsicherung, bestehend aus einer Überwachungseinheit, einer Bordkommunikationseinheit, einem GPS-Tracker des Fahrzeuges, einem Fernserver, einer Empfangseinrichtung mit einem Bewegungssensor, einem GPS-Tracker und einem Bildschirm mit dargestellter Notifikation;
Fig. 3 - die schematische Darstellung des Ablaufs der Auswertung der Fahrzeugsicherung;
Fig. 4 - die schematische Darstellung des Ablaufs der Auswertung der Sicherung unter Nutzung des GPS-Trackers.

### Ausführungsbeispiele der technischen Lösung:

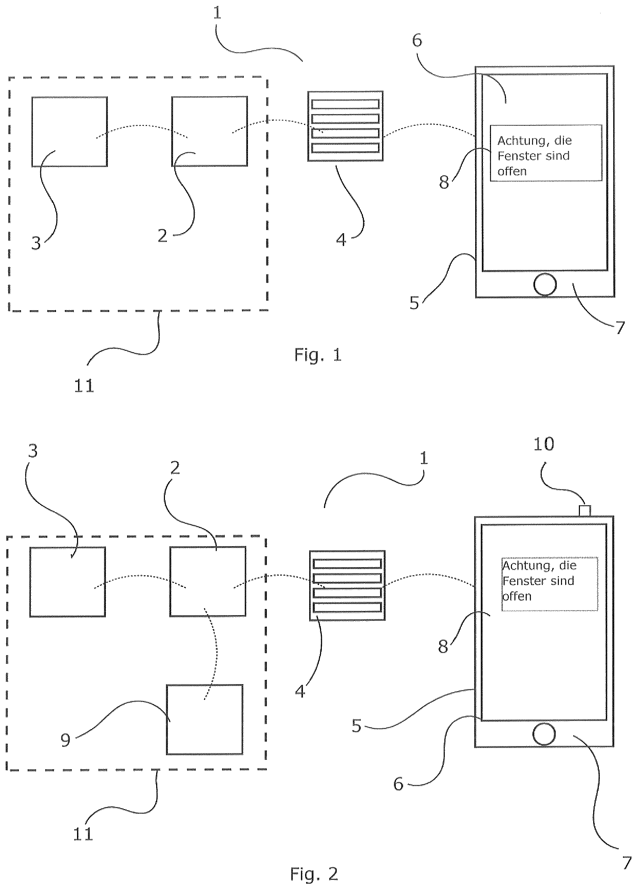

Das erste Ausführungsbeispiel der Erfindung zeigt die Fig. 1. Das System 1 nach dem ersten Ausführungsbeispiel der Erfindung umfasst eine für den Empfang und Sendung von Informationen ausgelegte Bordkommunikationseinheit 2 an der Fahrzeugseite 11, eine Überwachungseinheit 3 an der Fahrzeugseite 11, die kommunikativ mit der Bordkommunikationseinheit 2 verbunden und für die Überwachung wenigstens des Schließens von Fahrzeugtüren und/oder -fenster und zur Überwachung des Motorzustandes, insbesondere sein Aus- und Einschalten, ausgestaltet ist, ein mit der Bordkommunikationseinheit 2 kommunikativ verbundenen Fernserver 4 und eine mit dem Fernserver 4 kommunikativ verbundene Empfangseinrichtung 5. Die Empfangseinrichtung 5 weist ferner wenigstens ein zur Anzeige von Notifikationen 8 ausgelegtes Bildschirm 6 und einen zur Erkennung der Bewegungsaktivität ausgestalteten Bewegungssensor 7. In dem Ausführungsbeispiel der Erfindung stellt die Empfangseinrichtung 5 ein Smartphone dar, die Erfindung ist jedoch nicht auf die Nutzung von Smartphone beschränkt, auch ein Tablet, eine Smartwatch, ein Smartarmband und ähnliche Geräte können verwendet werden, die eine drahtlose Kommunikation mit einem Fernserver, die Anzeige der Notifikation und die Implementierung des Bewegungssensor 7 ermöglichen. Unter kommunikativen Verbindung wird die Verbindung für die Übertragung der Information zwischen kommunikativ verbundenen Elementen verstanden und kann drahtgebunden sowie drahtlos erfolgen. In dem Ausführungsbeispiel der Erfindung ist die kommunikative Verbindung zwischen dem Fernserver 4 und der Bordkommunikationseinheit 2 und dem Fernserver 4 und der Empfangseinrichtung 5 drahtlos mittels des Kommunikationsprotokolls 4G/LTE realisiert, ist jedoch nicht auf die Verwendung dieses Protokolls beschränkt. Beispielsweise können die 3G, LPWAN, WIFI, Bluetooth, 5G, 6G, GSM oder sonstige drahtlose Kommunikationsschnittstellen genutzt werden, die wenigstens die Übertragung einer Textinformation zwischen den kommunikativ verbundenen Elementen ermöglichen.

Die Überwachungseinheit 3 ist für die Überwachung wenigstens des Schließens der Fahrzeugtüren und/oder -fenster ausgelegt. Dies bedeutet, dass sie zum beliebigen Zeitpunkt über die Information darüber verfügt, in welchem Zustand die Fahrzeugfenster und/oder -türen sind. Als Zustand der Türen oder Fenster wird verstanden, ob diese geöffnet, geschlossen, unzureichend geschlossen, verriegelt oder entriegelt sind, ebenso bei der Heckklappe beziehungsweise den Laderaumtüren. Die Überwachungseinheit 3 ist ferner für die Überwachung des Motorzustandes ausgelegt, wo als Motorzustand sein Lauf oder Stillstand gemeint ist, und verfügt also zum beliebigen Zeitpunkt die Information über den Motorzustand. Die Überwachungseinheit 3 ist jedoch nicht auf die Überwachung nur des Zustands von Fenstern und/oder Türen und des Motors beschränkt, sondern für die Überwachung beliebiger relevanten Informationen bezüglich der Fahrzeugsicherung ausgelegt, zum Beispiel des Zustandes der Autobatterie, unerwarteter Bewegung des Fahrzeuges, der Bewegung in der Fahrzeugumgebung u.Ä. Die Überwachungseinheit 3 muss nicht aus einem Einzelteil bestehen, sondern sie kann als ein System einzelner Überwachungsmodule ausgestaltet sein, aus denen jedes eine partielle abgefragte Information über den Fahrzeugzustand überwacht. Die Überwachungseinheit 3 gibt diese Informationen an die Bordkommunikationseinheit 2 über die Kommunikationsverbindung dieser zwei Komponente weiter, wobei diese Kommunikationsverbindung drahtgebunden oder drahtlos realisiert werden kann. Die Bordkommunikationseinheit 2 ist für den Empfang von Informationen über den Zustand der Fahrzeugsicherung von der Überwachungseinheit 3 und für anschließende Versendung dieser Informationen an den Fernserver 4 ausgelegt. Diese Versendung kann dann kontinuierlich oder in ausgewählten Zeitabständen erfolgen. Der Fernserver 4 ist für den Empfang von Informationen von der Bordkommunikationseinheit 2 und der Empfangseinrichtung 5 und für die Versendung von Informationen an die Bordkommunikationseinheit 2 und die Empfangseinrichtung 5 ausgelegt. Der Empfang und die Versendung der Informationen kann dann kontinuierlich oder in ausgewählten Zeitabständen erfolgen. Die Empfangseinrichtung 5 ist für die Versendung und den Empfang von Informationen an/vom Fernserver 4 ausgelegt. Dies kann kontinuierlich oder in ausgewählten Zeitabständen oder aufgrund einer Abfrage vom Nutzer der Empfangseinrichtung 5 oder aufgrund der Erfüllung von Kriterien, beispielsweise die Überschreitung eines Schwellenwertes der Bewegung des Nutzers, erfolgen. Die Empfangseinrichtung 5 weist ein Bildschirm 6 auf, der für die Anzeige von Notifikationen 8 beziehungsweise Hinweise ausgestaltet ist. Die Notifikationen 8 können in Form einer SMS-, MMS- oder E-Mail-Nachricht oder eines Hinweises über eine installierte App erfolgen, die zur Vermittlung der Betriebsweise des Systems 1 für die Überwachung der Fahrzeugsicherung ausgestaltet ist. Die Empfangseinrichtung 5 weist weiter einen Sensor 7 der Bewegungsaktivität des Nutzers auf. Der Bewegungssensor 7 ist für die Überwachung der Bewegungsaktivität des Nutzers ausgelegt und in dem Ausführungsbeispiel kann dies ein Akzelerometer oder ein Pedometer sein. Die Erfindung ist nicht auf die Verwendung dieser zwei Geräte für die Implementierung des Bewegungssensors 7 beschränkt.

Weitere Ausführungsbeispiele umfassen jeweils eine Überwachungseinheit 3, die für weitere Überwachung ausgelegt ist, wenigstens des Zustandes der Fahrzeugentriegelung, beziehungsweise ob das Fahrzeug entriegelt/verriegelt ist; des Parkbremsenzustandes, beziehungsweise ob das Fahrzeug mit der Parkbremse gesichert/ungesichert ist; des Zustandes des oder der Fenster, beziehungsweise ob Fenster geöffnet/geschlossen sind; des Zustandes der Türen, beziehungsweise ob die Türen geöffnet/geschlossen sind; des Zustandes der Anwesenheit einer Person oder eines Tieres auf dem Rücksitz, zum Beispiel die Anwesenheit eines Kindes oder Hundes auf dem Rücksitz nach dem Verlassen des Fahrzeuges; des Batteriezustandes, zum Beispiel die Erreichung eines kritischen Batterieladestandes beim Hybridfahrzeug, oder einer Vollaufladung oder Vollentladung der Batterie; des Zustandes des Kraftstoffbehälters, zum Beispiel zu niedriger Kraftstoffstand; des Zustandes der Betriebsflüssigkeiten, zum Beispiel zu geringer Ölstand, Kühlflüssigkeitsstand, Waschwasserstand, Bremsflüssigkeitsstand usw.; des Zustandes der Reifen, zum Beispiel zu geringer Reifendruck oder hoher Reifendruck oder unterschiedlicher Reifendruck; des Zustandes der Fahrzeugbewegung, zum Beispiel ob das Fahrzeug den festgelegten Bereich unberechtigt verlassen hat; des Zustandes der Fahrzeugalarmanlage, zum Beispiel ob die Alarmanlage eingeschaltet ist; des Wetterzustandes oder eines heranziehenden Wetterumbruchs, zum Beispiel einen ankommenden Sturm, Hagel, Gewitter usw.; des Zustandes der Fahrzeugposition, zum Beispiel ob das Fahrzeug in einem Bereich des Parkverbots oder Haltverbots hinterlassen wurde. Die Überwachungseinheit 3 ist nicht auf die Überwachung nur dieser Informationen über den Fahrzeugzustand beschränkt. Jegliche ermittelten Informationen über den relevanten Fahrzeugzustand sendet die Überwachungseinheit 3 an die Bordkommunikationseinheit 2, von welcher diese an den Fernserver 4 versendet werden, und bei einer Überschreitung des Schwellenwertes der Aktivität des Nutzers auf die unten beschriebene Art und Weise werden diese Informationen an die Empfangseinrichtung 5 gesendet, an deren Bildschirm 6 sie in Form von Notifikationen 8 angezeigt werden.

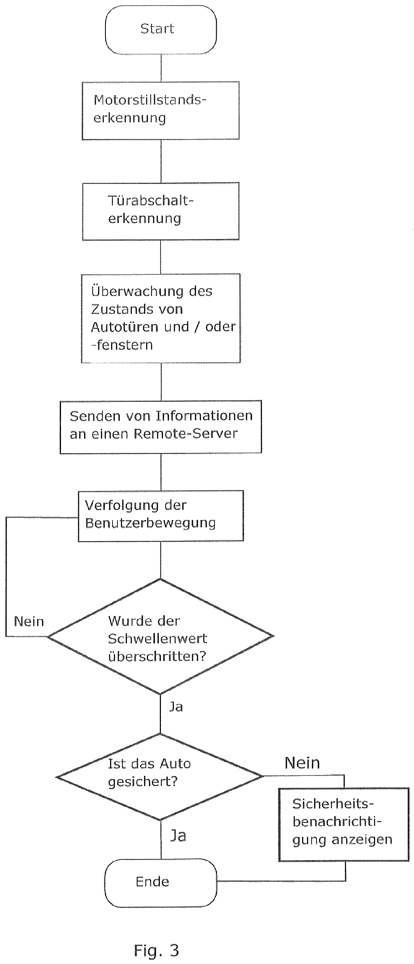

Die Nutzungsart des Systems 1 für die Überwachung der Fahrzeugsicherung gemäß dem ersten Ausführungsbeispiel zeigt schematisch die Fig. 3. Die Überwachungseinheit 3 erkennt zuerst das Ausschalten des Fahrzeugmotors, wodurch der Prozess der Nutzung des Systems 1 für die Überwachung der Fahrzeugsicherung eingeleitet wird. Anschließend erkennt die Überwachungseinheit 3 das Öffnen der Türen, was das Verlassen des Fahrzeuges vom Fahrzeugnutzer impliziert. Danach überwacht die Überwachungseinheit 3 den Zustand aller Fahrzeugfenster und -türen, wobei als Zustand wird verstanden, ob diese geöffnet, geschlossen, unzureichend geschlossen, verriegelt oder entriegelt sind. Diese Information wird an die Bordkommunikationseinheit 2 und anschließend an den Fernserver 4 übergeben. Vor allem werden solche Zustände der Türen sowie Fenster überwacht, die als Folge die Verringerung der Fahrzeugsicherung haben, insbesondere also wenn die Fahrzeugtüren geöffnet, geschlossen, unzureichend geschlossen oder entriegelt sind. Die Bewegung des Fahrzeugnutzers wird durch den Sensor 7 der Nutzeraktivität in der Empfangseinrichtung 5 überwacht. Falls der Schwellenwert der Bewegungsaktivität des Nutzers überschritten wird, sendet die Empfangseinrichtung 5 eine Anforderung an den Fernserver 4 auf die Versendung der Information über den Zustand der Türen und/oder Fenster an die Empfangseinrichtung 5 vom Fernserver 4, wobei diese Information an dem Bildschirm 6 der Empfangseinrichtung als Notifikation 8 angezeigt wird. Die Überschreitung des Schwellenwertes der Bewegungsaktivität ist im Ausführungsbeispiel der Erfindung beispielhaft durch die länger als 10s dauernde Bewegung des Nutzers eventuell die Zurücklegung von wenigstens zehn Schritten definiert, was ein ausreichendes Entfernen des Nutzers vom Fahrzeug bedeutet.

In einem Ausführungsbeispiel kommt es dann zum Anhalten des Fahrzeuges durch den Nutzer und zum Ausschalten des Motors. Nach dem Verlassen des Fahrzeuges durch den Nutzer, das anhand des Öffnens der Vordertüren an der Fahrerseite erkannt wird, überwacht die Überwachungseinheit 3 den Zustand aller Fahrzeugfenster und -türen, wobei als Zustand wird verstanden, ob diese geöffnet, geschlossen, unzureichend geschlossen, verriegelt oder entriegelt usw. sind. Diese Information wird an die Bordkommunikationseinheit 2 und anschließend an den Fernserver 4 übergeben. Vor allem werden solche Zustände der Türen sowie Fenster überwacht, die als Folge die Verringerung der Fahrzeugsicherung haben, insbesondere also wenn die Fahrzeugtüren geöffnet, geschlossen, unzureichend geschlossen oder entriegelt sind. Der Nutzer beginnt sich zu bewegen, was durch den Sensor 7 der Nutzeraktivität erkannt wird. Beim Akzelerometer wird seine Bewegung allgemein erkannt, beim Pedometer werden seine Schritte gezählt. Sobald der Wert der Bewegung des Nutzers den Schwellenwert überschreitet, wird von der Empfangseinrichtung 5 eine Anforderung an den Fernserver 4 auf die Versendung der Informationen über den Fahrzeugzustand gesendet. Sofern sich das Fahrzeug im Zustand befindet, bei dem das Niveau der Fahrzeugsicherung verringert ist, beispielsweise wegen der geöffneten Fenster oder aus anderen oben genannten Gründen, wird der Nutzer auf diese Tatsache durch die Anzeige einer Notifikation 8 auf dem Bildschirm 6 der Empfangseinrichtung 5 hingewiesen.

Ein weiteres Ausführungsbeispiel der Erfindung zeigt die Fig. 2. Das System 1 nach dem zweiten Ausführungsbeispiel der Erfindung umfasst eine für den Empfang und Sendung von Informationen ausgelegte Bordkommunikationseinheit 2 an der Fahrzeugseite 11, eine Überwachungseinheit 3 an der Fahrzeugseite 11, die kommunikativ mit der Bordkommunikationseinheit 2 verbunden und für die Überwachung wenigstens des Schließens von Fahrzeugtüren und/oder -fenster und zur Überwachung des Motorzustandes, insbesondere sein Aus- und Einschalten, ausgestaltet ist, einen für die GPS-Ortung des Fahrzeuges ausgestalteten und kommunikativ mit der Bordkommunikationseinheit 2 verbundenen GPS-Tracker 9 des Fahrzeuges an der Fahrzeugseite 11, ein mit der Bordkommunikationseinheit 2 kommunikativ verbundenen Fernserver 4 und eine mit dem Fernserver 4 kommunikativ verbundene Empfangseinrichtung 5. Die Empfangseinrichtung 5 weist ferner wenigstens ein zur Anzeige von Notifikationen 8 ausgelegtes Bildschirm 6, ein zur Erkennung der Bewegungsaktivität ausgestalteten Bewegungssensor 7 und einen für die GPS-Ortung der Empfangseinrichtung 5 ausgelegten GPS-Tracker 10 auf. In dem Ausführungsbeispiel der Erfindung stellt die Empfangseinrichtung 5 ein Smartphone dar, die Erfindung ist jedoch nicht auf die Nutzung von Smartphone beschränkt, auch ein Tablet, eine Smartwatch, ein Smartarmband und ähnliche Geräte können verwendet werden, die eine drahtgebundene oder drahtlose Kommunikation mit einem Fernserver, die Anzeige der Notifikation und die Implementierung des Bewegungssensor 7 ermöglichen. Unter kommunikativen Verbindung wird die Verbindung für die Übertragung der Information zwischen kommunikativ verbundenen Elementen verstanden und kann drahtgebunden sowie drahtlos erfolgen. In dem Ausführungsbeispiel der Erfindung ist die kommunikative Verbindung zwischen dem Fernserver 4 und der Bordkommunikationseinheit 2 und dem Fernserver 4 und der Empfangseinrichtung 5 drahtlos mittels des Kommunikationsprotokolls 4G/LTE realisiert, ist jedoch nicht auf die Verwendung dieses Protokolls beschränkt. Beispielsweise können die 3G, LPWAN, WIFI, Bluetooth, 5G, 6G, GSM oder sonstige drahtlose Kommunikationsschnittstellen genutzt werden, die wenigstens die Übertragung einer Textinformation zwischen den kommunikativ verbundenen Elementen ermöglichen. Für dieses Ausführungsbeispiel gilt ferner alles, was auch beim ersten Ausführungsbeispiel genannt wurde.

Auch in diesem Ausführungsbeispiel ist die Überwachungseinheit 3 für weitere Überwachung ausgelegt, wenigstens des Zustandes der Fahrzeugentriegelung, beziehungsweise ob das Fahrzeug entriegelt/verriegelt ist; des Parkbremsenzustandes, beziehungsweise ob das Fahrzeug mit der Parkbremse gesichert/ungesichert ist; des Zustandes des oder der Fenster, beziehungsweise ob Fenster geöffnet/geschlossen sind; des Zustandes der Türen, beziehungsweise ob die Türen geöffnet/geschlossen sind; des Zustandes der Anwesenheit einer Person oder eines Tieres auf dem Rücksitz, zum Beispiel die Anwesenheit eines Kindes oder Hundes auf dem Rücksitz nach dem Verlassen des Fahrzeuges; des Batteriezustandes, zum Beispiel die Erreichung eines kritischen Batterieladestandes beim Hybridfahrzeug, oder einer Vollaufladung oder Vollentladung der Batterie; des Zustandes des Kraftstoffbehälters, zum Beispiel zu niedriger Kraftstoffstand; des Zustandes der Betriebsflüssigkeiten, zum Beispiel zu geringer Ölstand, Kühlflüssigkeitsstand, Waschwasserstand, Bremsflüssigkeitsstand usw.; des Zustandes der Reifen, zum Beispiel zu geringer Reifendruck oder hoher Reifendruck oder unterschiedlicher Reifendruck; des Zustandes der Fahrzeugbewegung, zum Beispiel ob das Fahrzeug den festgelegten Bereich unberechtigt verlassen hat; des Zustandes der Fahrzeugalarmanlage, zum Beispiel ob die Alarmanlage eingeschaltet ist; des Wetterzustandes oder eines heranziehenden Wetterumbruchs, zum Beispiel einen ankommenden Sturm, Hagel, Gewitter usw.; des Zustandes der Fahrzeugposition, zum Beispiel ob das Fahrzeug in einem Bereich des Parkverbots oder Haltverbots hinterlassen wurde. Die Überwachungseinheit 3 ist nicht auf die Überwachung nur dieser Informationen über den Fahrzeugzustand beschränkt. Jegliche ermittelten Informationen über den relevanten Fahrzeugzustand sendet die Überwachungseinheit 3 an die Bordkommunikationseinheit 2, von welcher diese an den Fernserver 4 versendet werden, und bei einer Überschreitung des Schwellenwertes der Aktivität des Nutzers auf die unten beschriebene Art und Weise werden diese Informationen an die Empfangseinrichtung 5 gesendet, an deren Bildschirm 6 sie in Form von Notifikationen 8 angezeigt werden.

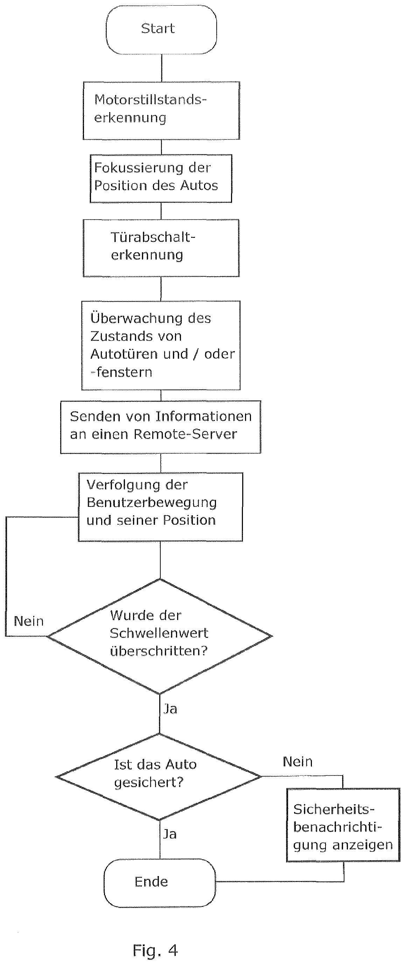

Die Nutzungsart des Systems 1 für die Überwachung der Fahrzeugsicherung gemäß dem zweiten Ausführungsbeispiel zeigt schematisch die Fig. 4. Die Überwachungseinheit 3 erkennt zuerst das Ausschalten des Fahrzeugmotors, wodurch der Prozess der Nutzung des Systems 1 für die Überwachung der Fahrzeugsicherung eingeleitet wird und die mittels des GPS-Trackers 9 geortete Position des Fahrzeuges an die Bordkommunikationseinheit 2 und anschließend an den Fernserver 4 gesendet wird. Anschließend erkennt die Überwachungseinheit 3 das Öffnen der Türen, was das Verlassen des Fahrzeuges vom Fahrzeugnutzer impliziert. Danach überwacht die Überwachungseinheit 3 den Zustand aller Fahrzeugfenster und -türen, wobei als Zustand wird verstanden, ob diese geöffnet, geschlossen, unzureichend geschlossen, verriegelt oder entriegelt sind. Diese Information wird an die Bordkommunikationseinheit 2 und anschließend an den Fernserver 4 übergeben. Vor allem werden solche Zustände der Türen sowie Fenster überwacht, die als Folge die Verringerung der Fahrzeugsicherung haben, insbesondere also wenn die Fahrzeugtüren geöffnet, geschlossen, unzureichend geschlossen oder entriegelt sind. Die Bewegung des Fahrzeugnutzers wird durch den Sensor 7 der Nutzeraktivität in der Empfangseinrichtung 5 überwacht und zugleich wird kontinuierlich oder in gewählten Zeitabständen die Position des Nutzers mittels eines GPS-Trackers 10 der Empfangseinrichtung 5 geortet. Falls der Schwellenwert der Bewegungsaktivität des Nutzers überschritten wird, sendet die Empfangseinrichtung 5 eine Anforderung an den Fernserver 4 auf die Versendung der Information über den Zustand der Türen und/oder Fenster an die Empfangseinrichtung 5 vom Fernserver 4, wobei diese Information an dem Bildschirm 6 der Empfangseinrichtung als Notifikation 8 angezeigt wird. Die Überschreitung des Schwellenwertes der Bewegungsaktivität ist im Ausführungsbeispiel der Erfindung beispielhaft durch die länger als 10s dauernde Bewegung des Nutzers eventuell die Zurücklegung von wenigstens zehn Schritten definiert, was ein ausreichendes Entfernen des Nutzers vom Fahrzeug bedeutet. Weitere Möglichkeit besteht in der laufenden Ermittlung des Abstandes zwischen dem Fahrzeug und dem Nutzer. Dieser Abstand wird anhand der mittels der GPS-Tracker 9 und 10 georteten Positionen des Fahrzeuges und des Nutzers ermittelt. Falls der Abstand einen Schwellenwert überschreitet, sendet die Empfangseinrichtung 5 eine Anforderung an den Fernserver 4 auf die Versendung der Information über den Zustand der Türen und/oder Fenster an die Empfangseinrichtung 5 vom Fernserver 4, wobei diese Information an dem Bildschirm 6 der Empfangseinrichtung als Notifikation 8 angezeigt wird.

In dem Ausführungsbeispiel kommt es dann zum Anhalten des Fahrzeuges durch den Nutzer und zum Ausschalten des Motors, was durch die Speicherung der mittels GPS-Tracker 9 georteten Position des Fahrzeuges begleitet wird. Der GPS-Tracker 9 ortet die Fahrzeugposition und sendet diese mittels der Bordkommunikationseinheit 2 an den Fernserver 4. Nach dem Verlassen des Fahrzeuges durch den Nutzer, das anhand des Öffnens der Vordertüren an der Fahrerseite erkannt wird, überwacht die Überwachungseinheit 3 den Zustand aller Fahrzeugfenster und -türen, wobei als Zustand wird verstanden, ob diese geöffnet, geschlossen, unzureichend geschlossen, verriegelt oder entriegelt usw. sind. Ferner wird mittels des GPS-Trackers 10 der Empfangseinrichtung 5 kontinuierlich oder in gewählten Zeitabständen die Position des Nutzers geortet. Die Information über den Zustand der Fahrzeugsicherung wird an die Bordkommunikationseinheit 2 und anschließend an den Fernserver 4 übergeben. Vor allem werden solche Zustände der Türen sowie Fenster überwacht, die als Folge die Verringerung der Fahrzeugsicherung haben, insbesondere also wenn die Fahrzeugtüren geöffnet, geschlossen, unzureichend geschlossen oder entriegelt sind. Der Nutzer beginnt sich zu bewegen, was durch den Sensor 7 der Bewegungsaktivität des Nutzers erkannt wird, und die Position des Nutzers wird kontinuierlich oder in gewählten Zeitabständen mittels des GPS-Trackers 10 der Empfangseinrichtung 5 geortet und an Fernserver 4 gesendet. Aus den ermittelten und auf dem Fernserver 4 gespeicherten Positionen des Fahrzeuges und des Nutzers wird zugleich der Abstand des Nutzers vom Fahrzeug berechnet. Beim Akzelerometer wird die Bewegung des Nutzers allgemein erkannt, beim Pedometer werden seine Schritte gezählt. Sobald der Wert der Bewegung des Nutzers oder der Abstand des Nutzers vom Fahrzeug den Schwellenwert überschreitet, wird von der Empfangseinrichtung 5 eine Anforderung an den Fernserver 4 auf die Versendung der Informationen über den Fahrzeugzustand gesendet. Sofern sich der Abstand des Nutzers vom Fahrzeug nicht unter den Schwellenwert verringert, wird an die Empfangseinrichtung 5 die Information über den Zustand der Fahrzeugsicherung gesendet. Sofern sich das Fahrzeug im Zustand befindet, bei dem das Niveau der Fahrzeugsicherung verringert ist, beispielsweise wegen der geöffneten Fenster oder aus anderen oben genannten Gründen, wird der Nutzer auf diese Tatsache durch die Anzeige einer Notifikation 8 auf dem Bildschirm 6 der Empfangseinrichtung 5 hingewiesen.

### Gewerbliche Anwendbarkeit:

Das erfindungsgemäße System für die Überwachung der Fahrzeugsicherung und seine Betriebsweise kann in ein Fahrzeug zur Verbesserung des Niveaus der Fahrzeugsicherung implementiert werden.

### Bezugszeichenliste

- 1 -: System für die Überwachung der Fahrzeugsicherung
- 2 -: Bordkommunikationseinheit
- 3 -: Überwachungseinheit
- 4 -: Fernserver
- 5 -: Empfangseinrichtung
- 6 -: Bildschirm der Empfangseinrichtung
- 7 -: Bewegungssensor
- 8 -: Notifikation
- 9 -: GPS-Tracker des Fahrzeuges
- 10 -: GPS-Tracker der Empfangseinrichtung
- 11 -: Fahrzeugseite

## Patentansprüche

1. Die Betriebsweise des Systems (1) zur Überwachung der Fahrzeugsicherung, wo das System (1) eine Bordkommunikationseinheit (2) an der Fahrzeugseite (11), eine Empfangseinrichtung (5) mit wenigstens einem zur Erkennung der Bewegungsaktivität des Nutzers ausgelegten Bewegungssensor (7) sowie mit einem Bildschirm (6), einen mit der Bordkommunikationseinheit (2) und Empfangseinrichtung (5) kommunikativ verbundenen Fernserver (4) und eine mit der Bordkommunikationseinheit (2) verbundenen Überwachungseinheit (3) an der Fahrzeugseite (11) umfasst, die zur Überwachung wenigstens des Schließens von Fahrzeugtüren und/oder -fenster, des Ausschaltens des Fahrzeugmotors und der Versendung der Information über den Zustand der Türen und/oder Fenster an die Bordkommunikationseinheit (2) ausgelegt ist, **dadurch gekennzeichnet, dass** es folgende Schritte umfasst:
- Erkennung des Ausschaltens des Fahrzeugmotors durch die Überwachungseinheit (3), wobei die Überwachungseinheit (3) zuerst das Ausschalten des Fahrzeugmotors erkennt, wodurch der Prozess der Nutzung des Systems (1) für die Überwachung der Fahrzeugsicherung eingeleitet wird;
- Anschließende Erkennung des Öffnens der Türen durch die Überwachungseinheit (3);
- Überwachung wenigstens des Zustandes der Fahrzeugtür und/oder -fenster durch die Überwachungseinheit (3);
- Versendung der Information über den Tür- und/oder Fensterzustand an die Bordkommunikationseinheit (2) und anschließend an den Fernserver (4);
- Erkennung der Bewegungsaktivität des Nutzers durch den Bewegungssensor (7) bis zur Überschreitung des Schwellenwertes der Bewegungsaktivität des Nutzers;
- und bei der Überschreitung des Schwellenwertes der Bewegungsaktivität des Nutzers die Versendung einer Anforderung der Empfangseinrichtung (5) auf die Zusendung der Zustandsinformation der Türen und/oder Fenster vom Fernserver (4) an die Empfangseinrichtung (5), wobei diese Information an dem Bildschirm (6) der Empfangseinrichtung (5) als Notifikation (8) angezeigt wird.

2. Die Betriebsweise des Systems (1) zur Überwachung der Fahrzeugsicherung nach Anspruch 1 **dadurch gekennzeichnet, dass** das System (1) ferner einen kommunikativ mit der Bordkommunikationseinheit (2) verbundenen GPS-Tracker (9) des Fahrzeuges an der Fahrzeugseite (11) und weiter eine mit GPS-Tracker (10) ausgestattete Empfangseinrichtung (5) umfasst, wobei bei Erkennung des Ausschaltens des Motors durch die Überwachungseinheit (3) die Fahrzeugposition vom GPS-Tracker (9) des Fahrzeuges ermittelt und diese Position an den Fernserver (4) gesendet wird, wobei nach Erkennung des Öffnens der Tür durch die Überwachungseinheit (3) die Position des Nutzers durch GPS-Tracker (10) kontinuierlich oder in gewählten Zeitabständen ermittelt und diese Position an den Fernserver (4) gesendet wird, aus der Position des Fahrzeuges und des Nutzers der Abstand des Nutzers vom Fahrzeug ermittelt wird und sollte dieser Abstand einen Schwellenwert überschreiten, werden Informationen über den Zustand der Fahrzeugsicherung an die Empfangseinrichtung (5) gesendet und sofern sich der Abstand des Nutzers vom Fahrzeug nicht unter den Schwellenwert verringert, wird eine Information über den Zustand der Fahrzeugsicherung an den Bildschirm (6) der Empfangseinrichtung (5) als Notifikation (8) angezeigt.

3. Die Betriebsweise des Systems (1) für die Überwachung der Fahrzeugsicherung nach beliebigen der vorhergehenden Ansprüche **dadurch gekennzeichnet, dass** die Überwachungseinheit (3) für die Überwachung sämtlicher relevanten Informationen über den Zustand der Fahrzeugsicherung ausgestaltet ist, wobei sie diese Informationen mittels der Bordkommunikationseinheit (2) an den Fernserver sendet (4).

4. Die Betriebsweise des Systems (1) für die Überwachung der Fahrzeugsicherung nach beliebigen der vorhergehenden Ansprüche **dadurch gekennzeichnet, dass** der Sensor (7) der Bewegungsaktivität ein Akzelerometer oder ein Pedometer ist.

5. Die Betriebsweise des Systems für die Überwachung der Fahrzeugsicherung nach beliebigen der vorhergehenden Ansprüche **dadurch gekennzeichnet, dass** die Information über den Zustand der Fahrzeugsicherung an dem Bildschirm (6) der Empfangseinrichtung (5) nur dann angezeigt wird, wenn das Fahrzeug ungesichert ist.

## Claims

1. The mode of operation of the system (1) for monitoring the vehicle security, where the system (1) comprises an on-board communication unit (2) on the side of the vehicle (11), a receiving device (5) with at least one motion sensor (7) designed to detect the movement activity of the user and with a screen (6), a remote server (4) communicatively connected to the on-board communication unit (2) and receiving device (5) and a monitoring unit (3) on the side of the vehicle (11) connected to the on-board communication unit (2), which is designed to monitor at least the closing of vehicle doors and/or windows, the switching off of the vehicle engine and the transmission of information on the state of the doors and/or windows to the on-board communication unit (2), **characterized in that** it comprises the following steps:
- Detection of the switching off of the vehicle engine by the monitoring unit (3), wherein the monitoring unit (3) first detects the switching off of the vehicle engine, whereby the process of using the system (1) for the monitoring of the vehicle security is initiated;
- Subsequent detection of the opening of the doors by the monitoring unit (3);
- Monitoring at least of the state of the vehicle door and/or window by the monitoring unit (3);
- Transmission of information on the door and/or window state to the on-board communication unit (2) and subsequently to the remote server (4);
- Detection of the movement activity of the user by the motion sensor (7) until the threshold value of the movement activity of the user is exceeded;
- and when the threshold value of the movement activity of the user is exceeded the transmission of a request from the receiving device (5) to send the state information of the doors and/or windows from the remote server (4) to the receiving device (5), wherein this information is displayed as notification (8) on the screen (6) of the receiving device (5).

2. The mode of operation of the system (1) for monitoring the vehicle security according to claim 1 **characterized in that** the system (1) also comprises a GPS tracker (9) of the vehicle on the side of the vehicle (11) connected communicatively to the on-board communication unit (2) and further a receiving device (5) equipped with GPS tracker (10), wherein, when the switching off of the engine is detected by the monitoring unit (3) the vehicle position is determined by the GPS tracker (9) of the vehicle and said position is sent to the remote server (4), wherein after detection of the opening of the door by the monitoring unit (3) the position of the user is determined by GPS tracker (10) continuously or in selected time intervals and said position is sent to the remote server (4), from the position of the vehicle and of the user the distance of the user from the vehicle is determined and if this distance should exceed a threshold value, information is sent on the state of the vehicle security to the receiving unit (5) and as long as the distance of the user from the vehicle is not reduced below the threshold value, information on the state of the vehicle security is displayed as notification (8) on the screen (6) of the receiving device (5).

3. The mode of operation of the system (1) for the monitoring of the vehicle security according to any one of the preceding claims **characterized in that** the monitoring unit (3) is designed to monitor all relevant information on the state of the vehicle security, wherein it sends this information by means of the on-board communication unit (2) to the remote server (4).

4. The mode of operation of the system (1) for monitoring the vehicle security according to any one of the preceding claims, **characterized in that** the sensor (7) of the movement activity is an accelerometer or a pedometer.

5. The mode of operation of the system for monitoring the vehicle security according to any one of the preceding claims, **characterized in that** the information on the state of the vehicle security is only displayed on the screen (6) of the receiving device (5) when the vehicle is unsecured.

## Revendications

1. Fonctionnement d'un système (1) pour la surveillance de la sécurité d'un véhicule, dans lequel le système (1) comprend une unité de communication embarquée (2) sur le côté du véhicule (11), un dispositif de réception (5) avec au moins un capteur de mouvement (7) conçu pour la détection de l'activité de déplacement de l'utilisateur ainsi qu'avec un écran (6), un serveur distant (4) relié de manière communicante avec l'unité de communication embarquée (2) et le dispositif de réception (5) et une unité de surveillance (3), reliée avec l'unité de communication embarquée (2), sur le côté du véhicule (11), qui est conçu pour la surveillance d'au moins la fermeture des portières et/ou des fenêtres du véhicule, de l'arrêt du moteur du véhicule et de l'envoi des informations concernant l'état des portières et/ou des fenêtres à l'unité de communication embarquée (2),
**caractérisé en ce qu'**il comprend les étapes suivantes :
- détection de l'arrêt du moteur du véhicule par l'unité de surveillance (3), dans lequel l'unité de surveillance (3) détecte d'abord l'arrêt du moteur du véhicule, ce qui initie le processus d'utilisation du système (1) pour la surveillance de la sécurité du véhicule ;
- ensuite, détection de l'ouverture des portières par l'unité de surveillance (3) ;
- surveillance d'au moins l'état des portières et/ou des fenêtres du véhicule par l'unité de surveillance (3) ;
- envoi des informations concernant l'état des portières et/ou des fenêtres à l'unité de communication embarquée (2) puis au serveur distant (4) ;
- détection de l'activité de déplacement de l'utilisateur par le capteur de mouvement (7) jusqu'au dépassement de la valeur seuil de l'activité de déplacement de l'utilisateur ;
- et, lors du dépassement de la valeur seuil de l'activité de déplacement de l'utilisateur, l'envoi d'une demande du dispositif de réception (5) d'un envoi des informations d'état des portières et/ou des fenêtres par le serveur distant (4) au dispositif de réception (5), dans lequel ces informations sont affichées à l'écran (6) du dispositif de réception (5) sous la forme de notifications (8).

2. Fonctionnement d'un système (1) pour la surveillance de la sécurité d'un véhicule selon la revendication 1, **caractérisé en ce que** le système (1) comprend en outre un tracer GPS (9) du véhicule, relié avec l'unité de communication embarquée (2), sur le côté du véhicule (11) et un dispositif de réception (5) muni du traceur GPS (10), dans lequel, lors de la détection de l'arrêt du moteur par l'unité de surveillance (3), la position du véhicule est déterminée par le traceur GPS (9) du véhicule et cette position est envoyée au serveur distant (4), dans lequel, après la détection de l'ouverture des portières par l'unité de surveillance (3), la position de l'utilisateur est déterminée par le traceur GPS (10) en continu ou à des intervalles de temps déterminés et cette position est envoyée au serveur distant (4), la distance entre l'utilisateur et le véhicule est déterminée à partir de la position du véhicule et de l'utilisateur et, si cette distance dépasse une valeur seuil, des informations concernant l'état de la sécurité du véhicule sont envoyées au dispositif de réception (5) et, si cette distance entre l'utilisateur et le véhicule ne diminue pas sous la valeur seuil, une information concernant l'état de la sécurité du véhicule est affichée à l'écran (6) du dispositif de réception (5) sous la forme d'une notification (8).

3. Fonctionnement d'un système (1) pour la surveillance de la sécurité d'un véhicule selon certaines des revendications précédentes, **caractérisé en ce que** l'unité de surveillance (3) est conçue pour la surveillance de l'ensemble des informations pertinentes concernant l'état de la sécurité du véhicule, dans lequel elle envoie ces informations au moyen de l'unité de communication embarquée (2) au serveur distant (4).

4. Fonctionnement d'un système (1) pour la surveillance de la sécurité d'un véhicule selon certaines des revendications précédentes, **caractérisé en ce que** le capteur (7) de l'activité de déplacement est accéléromètre ou un podomètre.

5. Fonctionnement d'un système pour la surveillance de la sécurité d'un véhicule selon certaines des revendications précédentes, **caractérisé en ce que** les informations concernant l'état de la sécurité du véhicule ne sont affichées à l'écran (6) du dispositif de réception (5) que lorsque le véhicule n'est pas sécurisé.
